# DEMANDE DE BREVET EUROPEEN

(11) **EP 1 810 573 A2**
(43) Date de publication de la demande: **25.07.2007**
(21) Numéro de dépôt: 07364001.3
(22) Date de dépôt: 10.01.2007
(51) Int. Cl.: A21D 13/00

(54) **Procèdé de fabrication d'une pièce de garniture**

(30) Priorité: 19.01.2006 FR 0600495
(71) Demandeur: A.B. Technologies Alimentaires, 56250 Elven (FR)
(72) Inventeur: Jouault, Bertrand, 56890 Saint Ave (FR)
(74) Mandataire: Bentz, Jean-Paul

(57) **Abrégé**

La présente invention concerne un procédé de fabrication d'une pièce plate de garniture, notamment d'un disque de garniture pour pizza, et un procédé de réalisation d'une pizza avec ledit disque de garniture. Le procédé de fabrication d'une pièce plate de garniture comprend une étape (12) de dépôt d'ingrédients solides à base de viandes, végétaux et/ou de fromages sur un support plat, et une étape (13) de vaporisation d'un liant liquide à base de fromage sur les ingrédients solides pour leur maintien.

## Description

La présente invention concerne un procédé de fabrication d'une pièce plate de garniture, notamment d'un disque de garniture pour pizza, et un procédé de réalisation d'une pizza avec ledit disque de garniture.

Il est connu par le document brevet WO 92/08358 un procédé de fabrication de pizza consistant à former un disque de garniture de pizza puis, après une étape éventuelle de congélation, à placer ce disque de garniture sur une pâte à pizza étalée pour former la pizza. Le disque de garniture est obtenu en formant sur un support une couche de fromage sous forme solide, de préférence du fromage émincé ou râpé, et en plaçant sur ladite couche des ingrédients de pizza classiques, à base de viandes et/ou de végétaux, une deuxième couche de fromage pouvant éventuellement être déposée ensuite sur les ingrédients. Le fromage et les ingrédients sont ensuite fusionnés pour former le disque de garniture, par fusion du fromage puis re-solidification du fromage. Ce procédé s'avère satisfaisant pour former un disque de garniture tenant de lui-même sans la pâte, avec des ingrédients maintenus bien répartis sur le dessus, mais nécessite une étape de chauffage pour fondre le fromage et une étape de refroidissement pour solidifier le fromage, ces étapes étant relativement longues et consommatrices d'énergie.

Le but de la présente invention est de proposer un procédé palliant les inconvénients précités, qui soit rapide et simple de mise en oeuvre.

A cet effet, la présente invention a pour objet un procédé de fabrication d'une pièce plate de garniture, notamment d'un disque de garniture pour pizza, caractérisé en ce qu'il comprend
- une étape de dépôt d'ingrédients solides à base de viandes, végétaux et/ou de fromages sur un support plat, et
- une étape de vaporisation d'un liant liquide à base de fromage sur les ingrédients solides pour leur maintien.

La vaporisation de liant liquide à base de fromage assure le maintien des ingrédients les uns par rapport aux autres lors de manipulations ultérieures de la pièce de garniture, notamment lors du retrait de son support, de son stockage, de son transport et de son utilisation pour la réalisation du produit alimentaire pour lequel il est destiné. Le procédé selon l'invention ne nécessite pas d'étape de chauffage et/ou de refroidissement pour agglomérer les ingrédients et le fromage. Le procédé selon l'invention est simple à mettre en oeuvre et permet la réalisation rapide et à moindre coûts de pièces de garniture, tel que des disques de garniture pour pizza.

Dans la présente, on entend par liant liquide ou liant liquide à froid, un liant qui est à l'état liquide aux températures de conservation classiques utilisées pour les produits alimentaires réfrigérés, généralement entre +2 et +10°C, usuellement entre +4°C et +8°C.

Avantageusement ledit liant liquide vaporisé est formé de fromage liquide. On entend par fromage tout produit selon les normes règlementaires en vigueur sur les dénominations fromage et fromage fondu, notamment la norme française (Décret n°88-1206 du 30 décembre 1988 - NOR-ECOC8800153D) et les normes générales CODEX (CODEX STAN A-6-1978 ; CODEX STAN A-8-1978). On entend par fromage liquide ou fromage liquide à froid un fromage selon lesdites normes qui est à l'état liquide aux températures de conservation classiques utilisées pour les produits alimentaires réfrigérés.

En variante, le liant liquide peut être constitué d'une sauce au fromage.

Selon un mode de réalisation, l'étape de dépôt d'ingrédients est précédée d'une étape de dépôt d'une base collante alimentaire sur le support en une couche sensiblement uniforme, ladite étape de dépôt d'ingrédients consistant à déposer les ingrédients sur ladite base collante. Selon ce mode de réalisation, les ingrédients sont agglomérés dans la base collante, le liant liquide vaporisé servant à figer les ingrédients. L'étape de vaporisation consiste alors à former un simple film ou pellicule de liant sur les ingrédients. En l'absence de la base collante, la quantité de fromage liquide vaporisée est plus importante afin de garantir le maintien des ingrédients les uns par rapport aux autres.

Ladite base collante est avantageusement formée d'un fromage pâteux et/ou de pulpe de tomate épaissie. On entend par fromage pâteux tout fromage qui est dans un état pâteux à température ambiante et qui peut être versé sur le support.

Suivant sa viscosité, ledit fromage pâteux peut être chauffé avant et/ou après son application sur le support pour faciliter son application et/ou améliorer la prise en masse des ingrédients.

Selon un mode de réalisation, l'étape de vaporisation est suivie d'une étape de congélation ou surgélation de la pièce de garniture, sur son support ou après retrait du support.

Le support est formé de tout matériau permettant un retrait aisé de la pièce de garniture après sa fabrication, avec ou sans étape de congélation ou surgélation. Ledit support peut se présenter sous la forme d'une feuille ou film souple, ou d'une plaque rigide. Avantageusement le support est constitué d'une plaque rigide qui sera utilisée pour la congélation ou surgélation, le stockage et/ou la commercialisation de la pièce de garniture.

La pièce de garniture obtenue selon le procédé peut présenter des formes plates diverses, notamment rectangulaires, triangulaires ou circulaires, pour la réalisation de différents produits alimentaires, en particulier la réalisation de pizzas, par des particuliers et/ou des professionnels dans des pizzerias.

La présente invention propose en outre un procédé de fabrication d'une pizza, caractérisé en ce qu'il comprend la réalisation d'une pièce plate de garniture tel que décrit précédemment, sous la forme d'un disque, ledit disque étant disposé sur une pâte à pizza, après retrait du support.

Selon un mode de réalisation, une sauce à base de tomate est appliquée sur le fond de pâte à pizza avant de déposer le disque de garniture. Lorsque le disque de garniture est congelé, la sauce à base de tomate garantit un meilleur maintien du disque sur la pâte lors de la manipulation de la pizza.

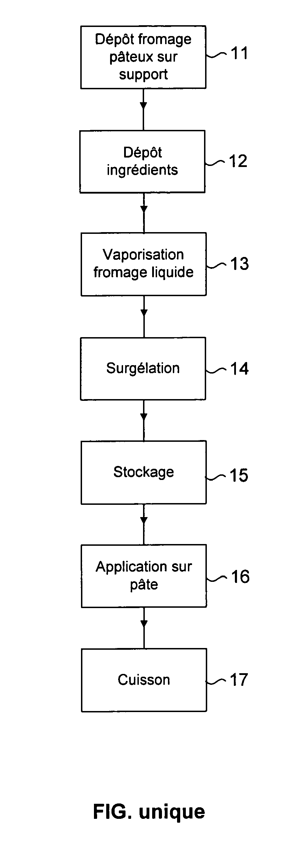

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence à la figure unique annexée qui représente un diagramme schématique illustrant les différentes étapes du procédé de fabrication d'une pizza.

Selon l'invention, la fabrication d'une pizza est réalisée à partir d'un disque de garniture prêt à l'emploi qui sera déposé sur une pâte à pizza étalée. Pour la fabrication du disque de garniture, la première étape 11 consiste à verser du fromage pâteux sur un support constitué d'une plaque circulaire en plastique huilé. Le fromage pâteux est déposé en une couche, d'épaisseur sensiblement uniforme, sur sensiblement toute la surface du disque. Pour une meilleure prise en masse des ingrédients, le fromage pâteux est déposé à une température de 35-40°C. En variante le fromage pâteux est remplacé par un mélange de tomate épaissi, formé par exemple de pulpe de tomate et d'un épaississant à base d'amidon.

Pour la fabrication rapide de plusieurs disques de garniture, des supports seront disposés les uns à la suite des autres sur le brin supérieur d'un convoyeur de type à bande sans fin. Le dépôt de fromage pâteux sur le support est réalisé depuis une ou plusieurs buses disposées au-dessus du convoyeur, la répartition en une couche uniforme sur le support étant réalisée par un opérateur avec un outil adapté, ou par des moyens mécaniques automatiques disposés le long du convoyeur en aval des buses.

Dans une étape suivante 12, les différents ingrédients pré-pesés complémentaires de la garniture sont déposés sur la couche de fromage pâteux. Ces ingrédients solides, à base de viandes, végétaux et/ou de fromages, sont ceux classiquement utilisés pour la fabrication de pizzas traditionnelles, tels que chorizo, lardons, jambon, emmental, oignons, champignons, poivrons... Ce dépôt d'ingrédients peut être réalisé depuis des postes manuels, automatiques et/ou semi-automatiques disposés le long du convoyeur précité, en aval des buses de versement du fromage pâteux, le convoyeur fonctionnant en continu ou pas à pas.

Ensuite, lors d'une étape de vaporisation 13, du fromage liquide à froid est vaporisé pour former un pelliculage de fromage sur l'ensemble de la garniture. La pellicule de fromage recouvre les ingrédients et les éventuelles zones de fromage pâteux non recouvertes par les ingrédients. Le fromage liquide est par exemple stocké dans un conteneur pressurisé, et pulvérisé sur la garniture via une ou plusieurs buses de pulvérisation connectées audit conteneur et disposées au-dessus du convoyeur. Le fromage liquide est avantageusement à une température comprise entre +2°C et + 10°C lors de sa vaporisation. Cette étape de vaporisation garantie une répartition uniforme, hygiénique et économique du fromage liquide. A titre d'exemple, le fromage liquide présente un taux de matières sèches de 35 à 50%, une viscosité de 0,5 à 5 Pa.s (viscosimètre Brookfield à 25°C), et un pH de 4 à 6. Le fromage liquide est placé dans le conteneur avec un gaz propulseur pour pressuriser le conteneur à une pression de 4 à 7 bars. Le gaz propulseur, avantageusement constitué de dioxyde de carbone, permet d'assurer la conservation du fromage liquide ainsi que la texture liquide en évitant qu'il ne se fige. Le fromage liquide pourra être vaporisé par tout autre système à pression approprié, tel qu'un système à piston.

Immédiatement après l'étape de vaporisation, le disque de garniture sur son support est soumis à une étape de surgélation 14, consistant en un refroidissement rapide à -18°C par un traitement thermique de -35 à -45°C, ou à une étape de congélation par un refroidissement plus lent à -12°C.

Dans une étape suivante 15, les disques de garniture peuvent ensuite être stockés et commercialisés congelés sur leur support.

Avant utilisation, le disque de garniture est retiré de son support et placé sur une pâte à pizza fraîche étalée (étape 16). Une couche de sauce à la tomate peut éventuellement être appliquée sur la pâte à pizza avant de déposer le disque de garniture. Ensuite, lors d'une étape finale 17, la pizza peut être mise à cuire dans un four. En variante, le disque de garniture peut être déposé sur une pâte à pizza congelée.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention. Le procédé selon l'invention pourra être utilisé pour la fabrication de pièces de garnitures destinés à la réalisation de produits alimentaires autres que des pizzas, par exemple pour la fabrication de pièces de garnitures rectangulaires pour la réalisation de sandwichs, notamment de type panini.

## Revendications

1. Procédé de fabrication d'une pièce plate de garniture, notamment d'un disque de garniture pour pizza, **caractérisé en ce qu'**il comprend
- une étape de dépôt (12) d'ingrédients solides à base de viandes, végétaux et/ou de fromages sur un support plat, et
- une étape de vaporisation (13) d'un liant liquide à base de fromage sur les ingrédients solides pour leur maintien.

2. Procédé selon la revendication 1, **caractérisé en ce que** ledit liant liquide vaporisé est formé de fromage liquide.

3. Procédé de fabrication d'une pièce plate de garniture selon la revendication 1 ou 2, **caractérisé en ce que** l'étape de dépôt d'ingrédients (12) est précédée d'une étape de dépôt (11) d'une base collante alimentaire sur le support en une couche sensiblement uniforme, ladite étape de dépôt d'ingrédients consistant à déposer les ingrédients sur ladite base collante.

4. Procédé selon la revendication 3, **caractérisé en ce que** l'étape de vaporisation (13) consiste à former un film de liant liquide sur les ingrédients.

5. Procédé selon la revendication 3 ou 4, **caractérisé en ce que** ladite base collante est formée d'un fromage pâteux et/ou de pulpe de tomate épaissie.

6. Procédé selon l'une des revendications 1 à 5, **caractérisé en ce que** l'étape de vaporisation (13) est suivie d'une étape de congélation ou surgélation (14) de la pièce de garniture, sur son support ou après retrait du support.

7. Procédé selon l'une des revendications 1 à 6, **caractérisé en ce que** ledit support est constitué d'une plaque rigide.

8. Procédé de fabrication d'une pizza, **caractérisé en ce qu'**il comprend la réalisation d'une pièce plate de garniture selon l'une des revendications 1 à 7 sous la forme d'un disque, ledit disque étant disposé sur une pâte à pizza, après retrait du support.

9. Procédé de fabrication d'une pizza selon la revendication 8, **caractérisé en ce qu'**une sauce à base de tomate est appliquée sur la pâte à pizza avant de déposer le disque de garniture.
